# EUROPÄISCHE PATENTSCHRIFT

(11) **EP 2 414 690 B1**
(45) Veröffentlichungstag und Bekanntmachung des Hinweises auf die Patenterteilung: **07.05.2014**
(21) Anmeldenummer: 10710326.9
(22) Anmeldetag: 24.03.2010
(51) Int. Cl.: F16C 19/16, F16C 33/78, F16D 23/14, F16J 15/32

(54) **AUSRÜCKLAGER MIT KONKAVER DICHTLIPPE**
CLUTCH RELEASE BEARING HAVING CONCAVE SEALING LIP
BUTÉE D'EMBRAYAGE AVEC LÈVRE D'ÉTANCHÉITÉ CONCAVE

(30) Priorität: 03.04.2009 DE 102009016228
(43) Veröffentlichungstag der Anmeldung: 08.02.2012
(73) Patentinhaber: Schaeffler Technologies GmbH & Co. KG, 91074 Herzogenaurach (DE)
(72) Erfinder: SMETANA, Tomas, 91074 Herzogenaurach (DE); RADINGER, Norbert, 90475 Nürnberg (DE)
(86) Internationale Anmeldenummer: PCT/EP2010/053828
(87) Internationale Veröffentlichungsnummer: WO 2010/112380

(56) Entgegenhaltungen:
- EP-A1- 0 773 384
- EP-A2- 1 239 173
- DE-A1- 3 814 921
- FR-A1- 2 736 113
- GB-A- 1 254 821

## Beschreibung

### Gebiet der Erfindung

Die Erfindung betrifft ein Ausrücklager zur Verwendung in einer Schalttrennkupplung, mit einem Wälzkörperraum, wobei der Wälzkörperraum eine Wälzkörperreihe enthält, von einem Außenring einem Innenring begrenzt ist und den jeweils eine Laufbahn für Wälzkörper der Wälzkörperreihen aufweisen und die Ringe jeweils eine Laufbahn für Wälzkörper der Wälzkörperreihe aufweisen und der Wälzkörperraum axial einseitig zwischen Außen- und Innenring mittels eines eine radiale Dichtlippe getragenen Dichtringes schleifend abgedichtet ist.

### Hintergrund der Erfindung

Man ist sehr bemüht eine Reibungsverminderung in Ausrücklagern ohne Zugeständnisse bei der Abdichtung deren Wälzräume zu erreichen. In der Vergangenheit hat man über konische Dichtlippen versucht von der Steifigkeit des Dichtringes zu profitieren, um die Dichtkraft einer radialen Dichtlippe zu verstärken. Dies wurde durch konische Dichtlippen unterstützt, die aufgrund ihrer im Längsschnitt linearen Struktur eine Kraft vom Dichtring gerade übertragen können. Problematisch daran ist, dass eine Beanspruchung des Dichtrings bzw. der Armierung, insbesondere des sog. Tellern derselben, zur einer nachteiligen Dichtkraftänderung führt.

Aus US 6 684 996 B2 sind beispielsweise derartige konische Dichtlippen bekannt.

Problematisch ist jedoch, dass man zudem den Toleranzbereich des Vorspannweges aus finanziellen und herstellungstechnischen Gründen nicht verändern kann, d.h. der Kosteneffizienz wegen eine große Fertigungstoleranz beibehalten möchte. Liegt nun die Kennlinie der Vorspannkraft innerhalb des Toleranzbereiches über 3N, so verbrennen die Dichtungen beim Betrieb, liegen sie unter 1 N, reicht deren Dichtfunktionen nicht aus.

In der Vergangenheit wurde deshalb entweder eine zweite Dichtlippe, eine weitere Spaltdichtung, ein verlängerter Presssitz in Betracht gezogen oder aufwändige, insbesondere materialaufwändige, Stabilisierungsmaßnahmen der Armierung eingesetzt, um diesem Problem Herr zu werden. Diese Lösungsansätze sind jedoch nicht kosteneffektiv oder führen zu anders gearteten Nachteilen.

Andere Dichtungen in Ausrücklagern sind aus FR 2 736 113 A1, EP 0 773 384 A1 und GB 1 254 821 A bekannt.

### Aufgabe der Erfindung

Der Erfindung liegt die Aufgabe zugrunde die vorgenannten Nachteile zu vermeiden.

Diese Aufgabe wird bei einem Ausrücklager der eingangsgenannten Art dadurch gelöst, dass die Dichtlippe in Längsrichtung zur Rotationsachse des Ausrücklagers eine kontinuierlich gekrümmte Form aufweist.

### Zusammenfassung der Erfindung

Der Erfindung liegt die Erkenntnis zugrunde, dass eine Entkopplung des Einflusses des Dichtringes auf die Dichtlippe erreicht werden sollte, damit Einflüsse aufgrund struktureller Schwachpunkte des Dichtringes weniger Einfluss auf die Dichtfunktion der Dichtlippe haben und nicht ungewollt bei der Installation oder anderweitig zu einer elliptischen Verformung der Dichtlippe und damit zu einer undefinierten Auflage führt.

Das erfindungsgemäße Ausrücklager einer Schalttrennkupplung weist einen Wälzkörperraum auf, der von einem Außen- und einem Innenring begrenzt ist und eine Wälzkörperreihe enthält, wobei die Ringe jeweils eine Laufbahn für Wälzkörper der Wälzkörperreihe aufweisen. Der Wälzkörperraum ist ferner axial einseitig zwischen Außen- und Innenring mittels eines eine radiale Dichtlippe tragenden Dichtringes schleifend abgedichtet.

Erfindungsgemäß ist vorgesehen, dass die Dichtlippe in Längsrichtung zur Rotationsachse des Ausrücklagers eine kontinuierlich gekrümmte Form aufweist. Kontinuierlich gekrümmt bedeutet hierbei, dass die Dichtlippe einen Abschnitt aufweist, der nicht konisch ist. Mathematisch ausgedrückt bedeutet dies, dass die Dichtlippe eine Reihe von Punkten aufweist, an denen die zweifache örtliche Ableitung nicht Null ist. Dadurch wird erreicht, dass einerseits die Dichtlippe dichtend umschließt, jedoch auch einen Puffer zum tragenden Teil des Dichtungsrings bildet, der Einflüsse vom Dichtungsring dämpft oder ganz unterbindet. Im Folgenden wird die kontinuierlich gekrümmte Form der Dichtlippe auch synonym als konkave Form bezeichnet.

Zusätzlich ist erfindungsgemaß der radiale Bereich der Dichtlippe durch eine Innen- und Außenradius definiert, wobei der Innenradius (Ri) kleiner als der Außenradius (Ra) ist und wobei die Dichtlippe in Richtung ihrer Anlauffläche hin verjüngt ist und in einer Spitze endet, deren axiale Ausdehnung H kleiner 0,25·Ra ist. Damit wird eine optimale Kontaktkraftübertragung durch die Dichtlippe auf die Anlauffläche sichergestellt, bei kleinstmöglicher Auflagefläche der Spitze.

Bei einer vorteilhaften Ausführungsform weist der Dichtring im Längsschnitt zur Rotationsachse des Ausrücklagers eine S-Form auf. Damit gewinnt der Dichtring an Stabilität ohne unverhältnismäßigen Materialverbrauch, insbesondere in radialer Richtung.

Bei einer vorteilhaften Ausführungsform weist der Dichtring in seinem Befestigungsbereich zum Außenring in Umfangsrichtung angeordnete Sicken auf. Diese Sicken können als radiale Senken oder Erhebungen in der Umfangsfläche des Dichtringes angeformt sein. Zu Anformung der Sicken eignet sich insbesonders der Befestigungsbereich des Dichtringes zum Außenring hin.

Anstatt der in Längsrichtung konkaven Form der Dichtlippe oder zusätzlich zu dieser Form kann der Dichtring und/oder ein Elastomer des Dichtrings radial gerichtete Rippen aufweisen, wobei die Rippen als Drallrillen und/oder Schaufeln ausgeführt sein können. Diese Rippen können in axialer Richtung vom Dichtring abgehen. Idealerweise sind die Rippen in Umfangsrichtung gekrümmt, womit ein Fördereffekt in radialer Richtung nach außen eintritt und insbesondere Wasser von der Dichtlippe fernhält.

Bei einer vorteilhaften Ausführungsform weist der Dichtring und/oder ein Elastomer des Dichtrings radial gerichtete Schaufeln auf. Durch derartige Rippen tritt ein Fördereffekt ein, der bei Rotation des Außenringes Flüssigkeiten, insbesondere Salzwasser, aber auch feuchte Luft von der radialen Dichtlippe weg, radial nach außen transportiert. Dies wird unterstützt durch den Zentrifugaleffekt, der bei rotierenden Dichtringen grundsätzlich immer vorliegt, jedoch zwingen die Schaufeln jeden Wasserpartikel oder sonstige Partikel zum Kontakt mit dem Dichtring womit der Zentrifugaleffekt erst voll zur Wirkung kommt. Ggf. können andere Dichtlippen oder Spaltdichtungen entfallen.

Bei einer vorteilhaften Ausführungsform sind die Schaufeln in Umfangsrichtung gekrümmt. Hierbei wird eine Förderung der Flüssigkeiten und Partikel nicht nur der Zentrifugalkraft überlassen, sondern aktiv nach außen gedrückt, indem die Kraft der Rotationsbewegung über die Schaufeln in eine radiale Schubkraftentwicklung umgewandelt wird. Dadurch stellt sich ein Ventilator ähnlicher Effekt ein, der einen kontinuierlichen Luftstrom in radialer Richtung bildet. Die Strömungsverhältnisse verbessern sich zusätzlich, wenn an die Schaufeln unmittelbar einer Radialfläche des Betätigungskolbens axial gegenüberliegen. Damit wird die Förderwirkung nämlich zusätzlich auf den Radialspalt, d.h. räumlich, begrenzt und durch den entstandenen Unterdruck die schleifende Anlage der Dichtlippe und somit das Dichtverhalten derselben verbessert.

Weitere vorteilhafte Ausbildungen und bevorzugte Weiterbildungen der Erfindung sind der Figurenbeschreibung und/oder den Unteransprüchen zu entnehmen.

### Beschreibung der Zeichnungen

Im Folgenden wird die Erfindung anhand der in den dargestellten Ausführungsbeispiele näher beschrieben und erläutert.

Es zeigen:
- Fig. 1: eine Schnittansicht eines Ausrücklagers gemäß dem Stand der Technik längs dessen Rotationsachse,
- Fig. 2: ein Diagramm der Vorspannkraft einer Dichtlippe in Abhängigkeit des Vorspannweges,
- Figs. 3 bis 6: ein Teilstück eines Dichtungsringes eines Ausrücklagers aus verschiedenen räumlichen Perspektiven,
- Fig. 7: eine konkave Dichtlippe im Längsschnitt, und

- Fig. 8: ein Ausrücklager in Längsschnitt mit einer konkaven Dichtlippe.

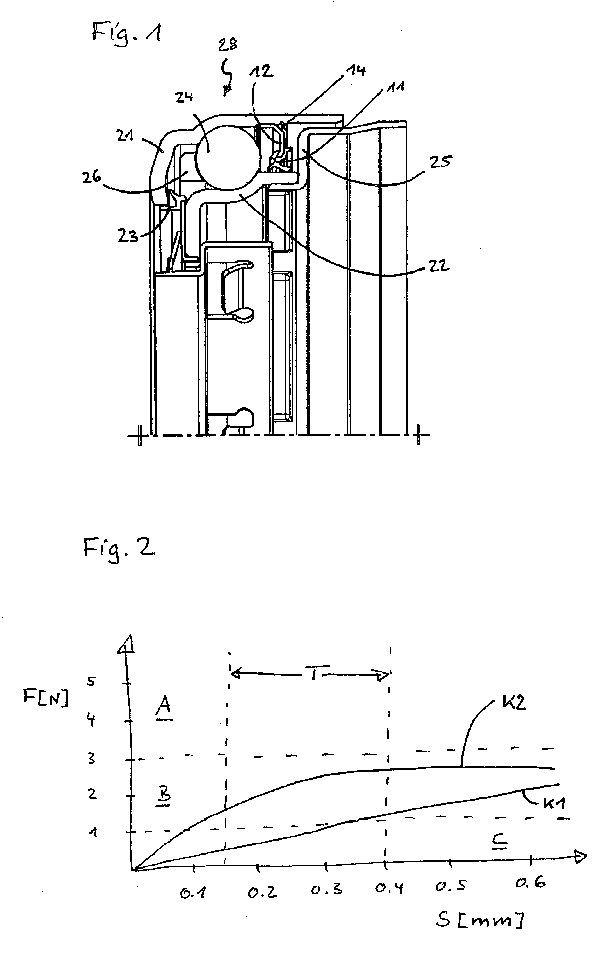

Fig. 1 zeigt eine Schnittansicht eines Ausrücklagers gemäß dem Stand der Technik längs dessen Rotationsachse. Das Ausrücklager ist als Schrägkugellager mit einer Wälzkörperreihe 24 ausgeführt.

Das Ausrücklager ist einseitig axial durch den Dichtring 12 abgedichtet, der die radiale Dichtlippe 11 trägt und mit dieser den Wälzraum 26 schleifend abdichtet, d.h., dass die Dichtlippe 11 auch während der Rotation des Außenringes 21 und des Dichtringes 12 dichtend an der Kontaktfläche des Innenringes 22 anliegt.

Auf der gegenüberliegenden Seite des Ausrücklagers wird der Wälzraum 26 radial durch das Elastomer 23 abgedichtet.

Fig. 2 zeigt ein Diagramm der Vorspannkraft F einer Dichtlippe 1 in Abhängigkeit des Vorspannweges S.

Herkömmliche Dichtungsringe weisen eine Kraftkennlinie K1 auf, die aufgrund des Steigungsverhaltens nur in einem relativ kleinen Bereich des Vorspannungsweges S zu einem Kraftwert F(S) führt, der innerhalb des Bereiches B liegt, in welchem eine Dichtung betrieben werden kann. Liegt die Kraft höher als F = 3N (im Bereich A), so verbrennt sie beim Betrieb, ist die Kraft F(S) < 1 N im Bereich C, so ist ihre Dichtfunktion nicht ausreichend.

Mit einer konkaven Dichtlippe stellt sich ein degressiver Verlauf der Kennlinie K2 ein. Mit zunehmendem Vorspannweg S reduziert sich die Steigung der Kennlinie K2, womit die degressive Dichtlippe in einem breiten Vorspannungswegintervall betrieben werden kann.

Die Lage des Toleranzfensters T wird in der Regel vom Hersteller vorgegeben kann aber in dessen Breite bei derartig filigranen Dichtlippen aus Elastomer nicht weiter reduziert werden.

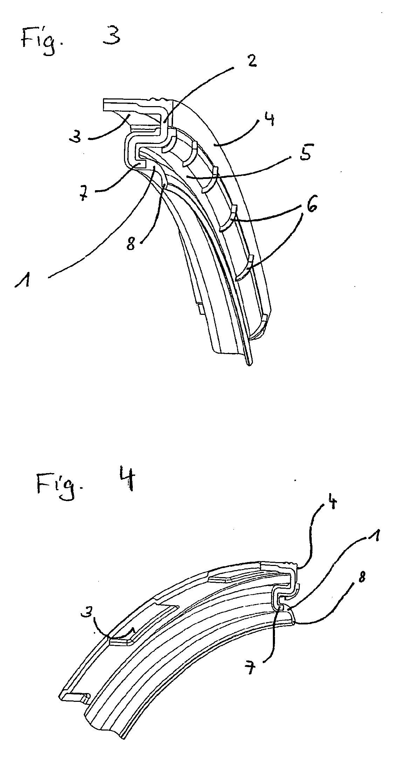

Figs. 3 bis 6 zeigt ein geschnittenes Teilstück eines Dichtungsringes 2 eines Ausrücklagers aus verschiedenen räumlichen Perspektiven.

Der Dichtring 2 weist im Längsschnitt eine s-artige Form auf. Am Endstück 7 des Dichtringes 2 geht das Elastomer in eine konkave Dichtlippe 1 über, die in Richtung der Kontaktfläche verjüngt ist und am Ende eine Spitze 8 aufweist, die der Fliehkraft entgegenwirkt und die Größe der ringförmigen Auflagefläche reduziert.

Radial außen im Bereich der Befestigung mit dem Außenring sind Sicken 3 ausgeformt, die einen größeren Radius aufweisen als die Umfangsfläche der Armierung. Dies wird durch das Befestigungselastomer 4 entsprechend ausgeglichen, sodass gegenüber dem Außenring eine zylinderförmige Anlagefläche entsteht.

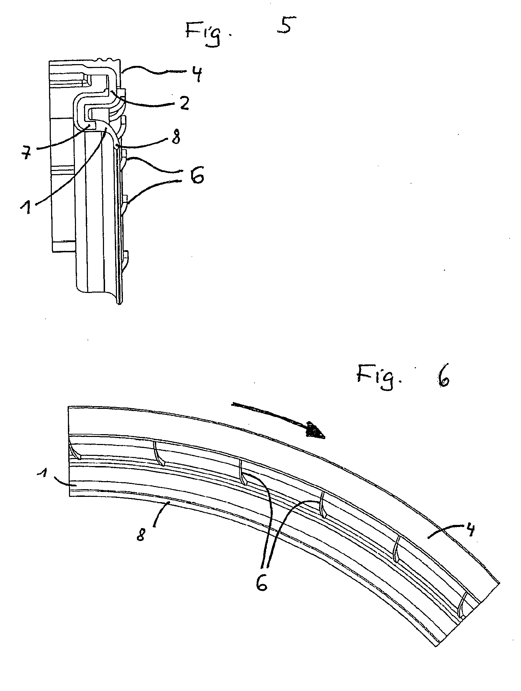

Die Schaufeln 6 sind am Elastomer 5 ausgebildet und treten axial am weitesten vom Dichtungsring 2 heraus, womit ein Schaufelradeffekt bezüglich Fremdpartikel, feuchter Luft und Flüssigkeiten eintritt. Diese sind idealerweise in die Nähe einer Radialfläche, z.B. eines Betätigungskolbens 25, wie in Fig. 1 anzuordnen, um bessere Fördereffekte zu erzielen. Dieser Effekt wird durch eine Krümmung der Schaufeln 6 in eine Umfangsrichtung verstärkt. Damit wird auch die Rotationsrichtung (Pfeil in Fig. 6) des Dichtringes 2 festgelegt. Die Schaufeln 6 bilden somit eine aktive Vordichtung aus, die die radiale Dichtlippe 1 entlastet.

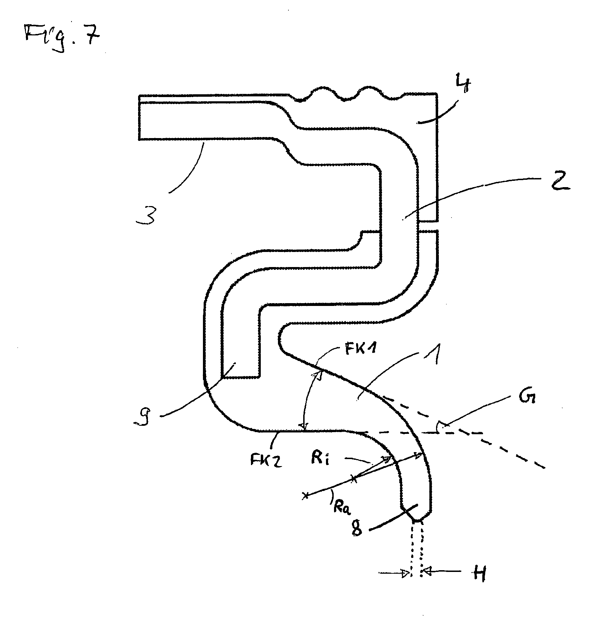

Fig. 7 zeigt eine konkave Dichtlippe 1 im Längsschnitt, wobei der Form der konkaven Dichtlippe 1 mindestens ein Radius zugrunde liegt. Dabei ist auch eine elliptische Form basierend auf zwei Radien möglich oder unterschiedliche Sektionen, denen unterschiedliche Radien zugrunde liegen, wobei die Krümmung in auch unterschiedliche Richtungen orientiert sein kann. Maßgeblich ist, dass eine Kräfteentkopplung des Bereiches der Dichtlippe 1 in der Nähe der Spitze 8 gegenüber dem Bereich des Endstückes 9 des Dichtringes 2 erzielt wird und die Dichtfunktion hauptsächlich auf der radialen Spannkraft der Spitze 8 basiert.

Die Dichtlippe 1 ist durch einen Innenradius Ri und einen Außenradius Ra definiert und damit auch deren Verjüngung in Richtung der Spitze 8. Dabei sollte der Innenradius Ri kleiner als der Außenradius Ra sein. Idealerweise beträgt Ri = 0,46 * Ra. Die Mittelpunkte des jeweiligen Kreises können, müssen aber nicht, aufeinanderliegen.

Zusätzlich weist die Dichtlippe 1 außer dem konkaven Bereich der Dichtlippe 1 noch einen konischen Teil auf, der von konischen Außenflächen FK1, FK2 begrenzt wird und fließend in den konkaven Teil übergeht. Dabei kann die Außenfläche F2 auch hohlzylindrisch sein. Beide Flächen schließen im Längsschnitt miteinander einen Winkel G ein, der 25 Grad beträgt, aber vorteilhafterweise innerhalb eines Intervalls von 10 bis 50 Grad gewählt werden sollte.

Die Spitze 8 ist weiter verjüngt, um eine kleinst mögliche Auflagefläche zu bieten, die axial eine Ausdehnung H von weniger als 0,25*Ra aufweist.

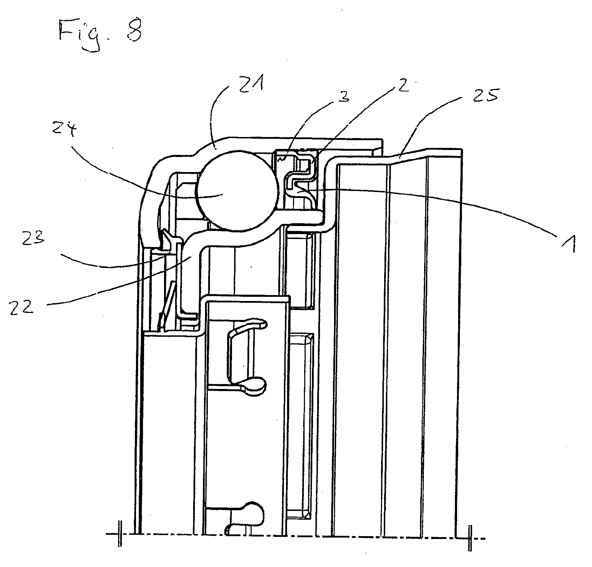

Fig. 8 zeigt ein Ausrücklager in Längsschnitt mit einer installierten Dichtungsanordnung aus Fig 7.

Zusammenfassend betrifft die Erfindung ein Ausrücklager einer Schalttrennkupplung, welches einen Wälzkörperraum aufweist, der von einem Außen- und einem Innenring begrenzt ist und eine Wälzkörperreihe enthält, wobei die Ringe jeweils eine Laufbahn für Wälzkörper der Wälzkörperreihe aufweisen. Der Wälzkörperraum ist ferner axial einseitig zwischen Außenund Innenring mittels eines eine radiale Dichtlippe tragenden Dichtringes schleifend abgedichtet. Es soll ein kostengünstiges Ausrücklager mit verbesserter Dichtwirkung angegeben werden. Dies wird dadurch erreicht, dass die radiale Dichtlippe in Längsrichtung zur Rotationsachse des Ausrücklagers eine kontinuierlich gekrümmte Form aufweist oder der Dichtring und/oder ein Elastomer des Dichtrings radial gerichtete Rippen aufweist.

**Bezugszeichenliste**

| | | | |
|---|---|---|---|
| A | Brandbereich | 25 | Betätigungskolben |
| B | Arbeitsbereich | 26 | Ausrücklager |
| C | Bereich ungenügender Dichtung | | |
| F | Dichtkraft | | |
| G | Winkel | | |
| H | Axiale Breite der Dichtfläche | | |
| K1 | Kurve herkömmlicher Dichtlippen | | |
| K2 | Kurve einer konkaven Dichtlippe | | |
| Ri | Innenradius | | |
| Ra | Außenradius | | |
| S | Vorspannweg | | |
| T | Toleranzbereich | | |
| 1 | konkave Dichtlippe | | |
| 2 | Dichtring | | |
| 3 | Sicke | | |
| 4 | Befestigungselastomer | | |
| 5 | Elastomer | | |
| 6 | Schaufeln | | |
| 7 | Endstück | | |
| 8 | Spitze | | |
| 9 | Endstück | | |
| 11 | Dichtlippe | | |
| 12 | Dichtring | | |
| 14 | Befestigungselastomer | | |
| 21 | Außenring | | |
| 22 | Innenring | | |
| 23 | Elastomer | | |
| 24 | Wälzköperreihe | | |

## Patentansprüche

1. Ausrücklager zur Verwendung in einer Schalttrennkupplung, mit einem Wälzkörperraum (26), wobei
- der Wälzkörperraum (26) eine Wälzkörperreihe (20) enthält,
- der Wälzkörperraum (26) von einem Außenring (21) und einem Innenring (22) begrenzt ist und die Ringe (21, 22 ) jeweils eine Laufbahn für Wälzkörper der Wälzkörperreihe (20) aufweisen und
- der Wälzkörperraum (26) axial einseitig zwischen Außenring (21) und Innenring (22) mittels eines eine radiale Dichtlippe (1,11) tragenden Dichtringes (2, 12) schleifend abgedichtet ist, **dadurch gekennzeichnet, dass** die Dichtlippe (1,11) in Längsrichtung zur Rotationsachse des Ausrücklagers eine kontinuierlich gekrümmte Form aufweist, und die kontinuierlich gekrümmte Form durch einen Innenradius (Ri) und einen Außenradius (Ra) definiert ist, wobei der Innenradius (Ri) kleiner als der Außenradius (Ra) ist und wobei die Dichtlippe (1,11) in Richtung ihrer Anlauffläche hin verjüngt ist und in einer Spitze (8) endet, deren axiale Ausdehnung H kleiner 0,25 * RA ist.

2. Ausrücklager nach Anspruch 1, wobei der Dichtring (2) im Längsschnitt zur Rotationsachse des Ausrücklagers eine S-Form aufweist.

3. Ausrücklager nach einem der vorhergehenden Ansprüche, wobei der Dichtring (2) in seinem Befestigungsbereich zum Außenring (21) in Umfangsrichtung angeordnete Sicken (3) aufweist.

4. Ausrücklager nach einem der vorhergehenden Ansprüche, wobei der Dichtring (2) und/oder ein Elastomer des Dichtrings (2) radial gerichtete Rippen, insbesondere Drallrillen oder Schaufeln (6), aufweist.

5. Ausrücklager nach Anspruch 4, wobei die Rippen (6) in Umfangsrichtung gekrümmt sind.

## Claims

1. Clutch release bearing for use in a disengaging clutch, having a rolling-body space (26),
- the rolling-body space (26) containing a rolling-body row (20),
- the rolling-body space (26) being delimited by an outer ring (21) and an inner ring (22), and the rings (21, 22) having in each case one raceway for rolling bodies of the rolling-body row (20), and
- the rolling-body space (26) being sealed in a rubbing manner axially on one side between the outer ring (21) and the inner ring (22) by means of a sealing ring (2, 12) which supports a radial sealing lip (1, 11), **characterized in that** the sealing lip (1, 11) has a continuously curved shape in the longitudinal direction with respect to the rotational axis of the clutch release bearing, and the continuously curved shape is defined by an inner radius (Ri) and an outer radius (Ra), the inner radius (Ri) being smaller than the outer radius (Ra), and the sealing lip (1, 11) tapering in the direction of its run-on face and ending in a tip (8), the axial extent H of which is smaller than 0.25 * Ra.

2. Clutch release bearing according to Claim 1, the sealing ring (2) having an S-shape in the longitudinal section with respect to the rotational axis of the clutch release bearing.

3. Clutch release bearing according to one of the preceding claims, the sealing ring (2) having beads (3) which are arranged in the circumferential direction in its fastening region with respect to the outer ring (21).

4. Clutch release bearing according to one of the preceding claims, the sealing ring (2) and/or an elastomer of the sealing ring (2) having radially directed ribs, in particular swirl ribs or vanes (6).

5. Clutch release bearing according to Claim 4, the ribs (6) being curved in the circumferential direction.

## Revendications

1. Butée de débrayage pour l'utilisation dans un embrayage de changement de vitesses, comprenant un espace pour corps de roulement (26),
- l'espace pour corps de roulement (26) contenant une rangée de corps de roulement (20),
- l'espace pour corps de roulement (26) étant limité par une bague extérieure (21) et une bague intérieure (22) et les bagues (21, 22) présentant chacune une piste de roulement pour des corps de roulement de la rangée de corps de roulement (20) et
- l'espace pour corps de roulement (26) étant étanché de manière glissante axialement d'un côté entre la bague extérieure (21) et la bague intérieure (22) au moyen d'une bague d'étanchéité (2, 12) portant une lèvre d'étanchéité radiale (1, 11), **caractérisée en ce que** la lèvre d'étanchéité (1, 11) présente, dans la direction longitudinale par rapport à l'axe de rotation de la butée de débrayage, une forme de courbure continue, et la forme de courbure continue est définie par un rayon intérieur (Ri) et un rayon extérieur (Ra), le rayon intérieur (Ri) étant inférieur au rayon extérieur (Ra) et la lèvre d'étanchéité (1, 11) étant rétrécie dans la direction de sa surface de butée et se terminant par une pointe (8) dont l'étendue axiale H est inférieure à 0,25 * RA.

2. Butée de débrayage selon la revendication 1, dans laquelle la bague d'étanchéité (2) présente une forme en S en section longitudinale par rapport à l'axe de rotation de la butée de débrayage.

3. Butée de débrayage selon l'une quelconque des revendications précédentes, dans laquelle la bague d'étanchéité (2) présente, dans sa région de fixation, des moulures (3) disposées dans la direction périphérique par rapport à la bague extérieure (21) .

4. Butée de débrayage selon l'une quelconque des revendications précédentes, dans laquelle la bague d'étanchéité (2) et/ou un élastomère de la bague d'étanchéité (2) présente(nt) des nervures orientées radialement, notamment des nervures de tourbillonnement ou des ailettes (6).

5. Butée de débrayage selon la revendication 4, dans laquelle les ailettes (6) sont courbées dans la direction périphérique.
